# EUROPEAN PATENT APPLICATION

(11) **EP 3 757 763 A1**
(43) Date of publication of application: **30.12.2020**
(21) Application number: 19182825.0
(22) Date of filing: 27.06.2019
(51) Int. Cl.: G06F 8/71, G06F 8/77, G06Q 10/10

(54) **METHOD FOR CREATING A VERIFIABLE RECORD OF EXECUTED ACTIVITIES IN A SOFTWARE DEVELOPMENT PROCESS AND INFORMATION PROCESSING APPARATUS**

(71) Applicant: Siemens Aktiengesellschaft, 80333 München (DE)
(72) Inventor: Beckers, Kristian, 80639 München (DE); Gasiba, Tiago, 81549 München (DE)

(57) **Abstract**

A method is provided for creating a verifiable record of executed activities in a software development process, the method comprising:
providing (S1) a pipeline (100) including a plurality of activities (10) to be executed based on the software development process,
executing (S2), during the software development process, for each of the activities (10) of the pipeline (100), a respective software tool (12),
creating (S3), by the respective software tool (12), a record (20) including activity information (I) relating to the activity (10), and
storing (S4) the record (20) created by the respective software tool (12) in a secure database system (200).

The method allows evidence that a software product complies to a desired security standard to be provided and to be verified from an objective point of view.

## Description

The present invention relates to a method for creating a verifiable record of executed activities in a software development process, an information processing apparatus and a network comprising a plurality of information processing apparatuses.

Companies have a wish obtain certificates which shall provide a proof to their customers that the companies' work processes comply to a specified standard, which can increase trust between the customer and the company. A common way for obtaining such a certificate are compliance reviews or audits, which are done by auditors from an external certification institution. The auditors come into the company to investigate the company's working processes, to interview workers, and so on, such that finally they can decide whether or not the company complies to the standard. However, this kind of certifying companies has several drawbacks. First, the services of the external certification institution can be very costly, in particular for larger companies. Second, the reviewing has to be repeated after some time, for example two years, to ensure the company still complies to the standard. Third, the external auditor may need access to sensible and/or confidential data and gets to see exactly how the company is organized, which can be problematic. Fourth, the trust a customer has in the company, based on the certificate, depends on the trust the customer has in the external certification institution.

Particularly in the field of software development, trust between a customer and a company can be crucial. The customer, for example a bank or an official authority, may be totally dependent on the company in that specific security regulations are met during the programming of a software. Here, certification of the company may give a basic level of trust. However, it is up to the company how the specifications of the certified standard are met, and even an auditor cannot assess in each case that a process really ensures compliance with certain security specifications. Furthermore, there is currently no way of verifying for the customer himself that, and how, a specification is met.

It is one objective of this invention to provide a method for creating a verifiable record of executed activities in a software development process, which can give proof of the compliance.

According to a first aspect, a method for creating a verifiable record of executed activities in a software development process is suggested. In a first step, a pipeline including a plurality of activities to be executed based on the software development process is provided. The activities are arranged in a sequential order in the pipeline. In a second step during the software development process, a respective software tool is executed for each of the activities of the pipeline. In a third step, the record including activity information relating to the respective activity is created by the respective software tool. In a fourth step, the record created by the respective software tool is stored in a secure database system such that by reading out the record, proof of the executed activity is provided.

This method allows that evidence that a software product complies to a desired security standard can be provided and can be verified from an objective point of view. This method has the advantage that the record including activity information relating to the executed activity is automatically created by the software tool at the time the activity is actually performed, and this record is then stored in the secure database system. By reading out the record from the secure database system, it can be checked or verified at any time after the activity was executed or performed that the activity has been executed and how it was executed. In particular, such record may be shown or given to a customer or an auditor as a proof that the activity was executed and how it was executed. Thus, a trust between a customer and a software development company can be increased, based on evidence. Further, this is possible on a per-product basis.

A verifiable record is, in particular, a digital file that can be stored in a data storage device, such as a hard disk, a flash memory device, a compact disk, DVD, Blu-Ray®, Minidisk, tape, and so on. Verifiable means at least that it is possible, at a time when the record is to be verified, to provide an indication that the record was not altered or changed since it has been created. For example, a time-stamp of creation and a time-stamp of last change are stored within the record, such that by comparing the two time-stamps, verification is achieved. Preferably, a hash-value of the record is calculated when the record is created and stored, such that by calculating the hash-value of the read-out record the record can be verified. The verified record then allows to consider exactly how the corresponding activity was executed and if certain specifications are met.

The software development process may be considered as comprising a plurality of stages, which are run through when a new software is developed. Examples for stages are planning, coding, code-checking, compiling, testing, releasing, and so on. In particular, the software development process may be mapped to a pipeline of activities. Such pipeline may be called a Dev-Ops pipeline, for example. The pipeline may be considered as an ordered arrangement of individual activities that are to be performed during the software development process. Details of the pipeline may be defined by a software engineer as a first step in the software development process, for example, during the planning stage. However, the pipeline may be pre-defined in the company, may be specific for certain kinds of projects, may be provided by a customer, or the like.

The pipeline, once started or triggered, leads to the software product, which stands at the end of the software development process. It is noted that the software product is not necessarily a completely new software product, which was developed from scratch, but may be an improvement of an existing software product, such as a bug-fix or an extension or the like. In that sense, all actions which change a software product can be considered a software development process.

To create or provide a pipeline, a software tool such as Jenkins may be used.

Providing the pipeline includes, in particular, arranging all activities needed and/or desired for the software development process in their appropriate order in the pipeline. Once the pipeline is defined, it may be started or triggered. After triggering the pipeline, execution of the first activity in the pipeline is started. Once an activity is started, it may not be skipped without executing the respective activity. However, in particular in the case of activities which include human interaction, it is possible that the activity is executed by clicking a button or the like, in the respective software tool. After one activity is finished, the next or subsequent activity in the pipeline is automatically triggered. Since the activities are arranged in a sequential order in the pipeline, the whole pipeline will be processed automatically, activity by activity.

For example, each activity has input data and output data. For an activity in the middle or the end of the pipeline, the output data of the last activity that was performed forms, at least partially, part of the input data. For the first activity in the pipeline, there may be no input data or the abstract idea of the software product to be developed may be considered as the input data. Also, a complete software product may be part of the input data.

An activity can be any kind of action or process. Further, an activity may include several tasks, some of which may require human interaction. For example, writing of a source code for one or several parts of a computer program can be an activity. Further, checking of a code, for example with respect to a definition of variables within the code, can be an activity. Also, compiling the source code, storing the source code, testing the compiled source code, and so on, are examples of activities.

Importantly, although activities are arranged in a sequential order in the pipeline, there may be tasks within one activity that can be performed in parallel, for example programming of different modules for a computer program. Additionally, there may be links between activities within the pipeline, such that an activity may refer to output data generated by at least one of the activities executed before. For example, one specific task may be present in several of the activities. If the task has been performed in one of the foregoing activities and needs to be performed only once, the task may be skipped within the currently executed activity.

It is noted that an activity may itself include a pipeline of activities and/or may include a number of activities to be performed in parallel.

For each of the activities, a respective software tool is executed. That is, each activity is coupled to a software tool. The software tool is specific for each activity. However, one software tool may be coupled to several activities. As an example, a text editor may be used for source code programming. Further, a drawing program may be used for designing elements of a graphical user interface. When an activity is finished, the respective software tool may be closed as well. The output of the activity preferably is a file that is created by the software tool and which is stored in a storage device, either locally or in a network.

Although execution of the next activity is triggered automatically after one activity is finished, some or all tasks included in an activity may include human interaction, such as the source code programming. Some other activities may be executed fully automatic, such as compiling of the source code.

The software tool also creates a record, or an artifact, which includes activity information. Activity information may include any kind of relevant information concerning the respective activity and its execution. For example, it may include information about a computer's hardware and/or software configuration on which the software tool executing the activity was executed at a time of execution, about a network configuration including active network connections at a time of execution, a user or operator interacting with the software tool and/or the computer during execution, a time, a condition, the company, the pipeline, the customer, and so on. Preferably, the activity information further includes information about the software tool that executed the activity, such as the source code and a documentation of the software tool, a hash-value of an output generated during execution of the activity, and even the information that is to be included in the activity information.

The activity information included in the record may include several digital files, which are bundled together in the record. For example, the record forms a container for the files constituting the activity information.

For each activity in the pipeline, it may be defined individually which information is to be included in the activity information by the software tool. Since the record with the activity information is created automatically by the respective software tool, the record can be used as a proof of how and when the activity of the pipeline has been executed.

The plurality of records created when the pipeline is run through may be considered as forming a "Compliance as Code Pipeline", which means that the information that is evidence that the software development process complies to a specific set of rules is saved in the records.

The record is then stored in a secure database system. For example, a secure database system includes a database with controlled access, such that only specific users can access the data stored in the database. Access may be controlled by an authentication system.

Preferably, the secure database system includes a version control system which is configured for storing versioned files. Versioned files include a time-stamp, and all versions a file may be kept. Storing may be performed on a differential basis.

In preferred embodiments, a hash-value of the record is created and stored with the record and/or separately from the record. A hash-value, such as MD5 or SHA, is a value with a predefined length, for example 64, 128, 256, 512, 1024 or 2048 Bits, which depends on the original record. Additionally, in cases when the record is a container including a plurality of files, for each file a hash-value may be generated and stored. When the record is later read-out from the secure database system, for example as proof of the executed activity, a hash-value of the read-out record can be calculated. If the two hash-values are identical, the read-out record is also identical to the one that was originally stored.

According to an embodiment of the method, the record is encrypted by using an encryption key and the encrypted record is stored in the secure database system.

The encrypted record can only be read out when the encryption key is known. Therefore, it is not possible for third parties to read out the record without knowing the encryption key. Additionally, it is not possible to change the record or activity information included therein without knowing the encryption key. This increases the security provided by the record.

Besides using encryption with an encryption key, other ways for encrypting data may be used.

According to a further embodiment of the method, the secure database system is implemented as a block chain stored in a distributed database system.

The block chain provides a particular high integrity and security, since all subsequent blocks depend on each block that was created earlier. Preferably, each record is stored as a block in the block chain. Storing the block chain in a distributed database system further increases the integrity of the block chain. A distributed database system includes several individual storage devices which are connected by a network connection, at least from time to time, each of which stores at least a part of the block chain. Preferably, all storage devices store a synchronized version of the block chain. By cross-checking a hash-value of the latest block of the block chain, integrity of the block chain is secured.

According to a further embodiment of the method, at least one of the activities in the pipeline is a security activity which implements at least one security specification relating to a secure software development process, and the respective software tool is a security tool.

According to a further embodiment of the method, the pipeline is embodied as a compliance pipeline including a predefined set of security activities.

For example, a security board may define a number of security levels, wherein each security level has specific requirements. Then, for each requirement, a security activity may be defined in order to achieve or fulfil that requirement. A pipeline which includes security activities such that all requirements of one of the security levels are met may be called a compliance pipeline, because a product that was developed by running through said pipeline complies to the security level. Such a software development process may be called secure software development process.

Performing the software development process on the basis of a compliance pipeline ensures that all security activities are executed during the process and a corresponding record is created and stored.

According to a further embodiment of the method, the predefined set of security activities included in the compliance pipeline is selected such that each of a plurality of security specifications defined in a standard is implemented by at least one of the security activities included in the predefined set.

This embodiment ensures that all activities required by the standard are executed during the software development process. Therefore, the resulting software product may be labelled as standard-compliant. Examples of such standards are IEC 62443-4-1, ISO 27034, or BSIMM.

In particular, by the records created by the respective security tool during execution of the security activities, proof of the compliance can be provided. Therefore, a customer may himself ensure that and how the security requirements are met.

According to a further embodiment of the method, the record includes a source code, a reference to a security specification which the source code fulfills, information about how the security specification is met, and/or the respective software tool or security tool that created the record.

This embodiment enables the customer or an auditor to judge, from an objective point of view, if the security activity as it was executed by the security tool fulfils all requirements of the respective specification.

According to a further embodiment of the method, a compliance record is created and stored, the compliance record including at least a source code of a software product produced, a compilation of the source code of the software product, and all records created during the software development process.

The software product produced is the software product that results from a run of the pipeline.

This embodiment enables to provide evidence, in the form of the compliance record, to third parties to proof that the software development process as a whole was performed in accordance with a specified standard, by reading out and verifying the compliance record. For example, creating the compliance record may be performed by a last security activity in the pipeline.

Preferably, the compliance record is protected by encryption. The compliance record may be stored in the secure database system along with all other records, or may be stored in a compliance database, which may be implemented as a separate secure database system, in particular using a block chain for increased integrity and security.

According to a further embodiment of the method, the record created and stored in the block chain further includes information identifying the pipeline and input data.

This embodiment provides that every entity which has access to the block chain, be it an information processing apparatus or a human operator, for example a software development engineer, may contribute to the software development process by executing an activity, since the pipeline is known and the input data is known. By input data, all data that may be required for performing an activity is denoted. In particular, output data of an earlier executed activity of the pipeline may form part of the input data.

According to a further embodiment of the method, it further comprises observing, by a plurality of nodes arranged in a distributed network, wherein each of the nodes is configured for executing at least one of the respective software tools, the block chain of the distributed database system to detect new records being stored therein, and executing the respective software tool corresponding to the subsequent activity in the pipeline by at least one of the nodes of the plurality.

This embodiment has the advantage that a plurality of nodes can participate in a run of a pipeline. The nodes may be represented by individual computer systems, by virtual computers running on a server, by a web-service, or the like. The network of nodes forms a computer network and may be denoted as a cloud.

The nodes may further be configured to analyze the new record that is stored in the block chain to determine if the corresponding pipeline is finished.

According to a further embodiment of the method one of the nodes of the plurality, before executing a respective software tool, publishes a work-claim for and executes the respective software tool if the work-claim is accepted by the block-chain and/or the other nodes.

This embodiment has the advantage that only one of the nodes will execute a respective activity, such that collisions between competing nodes are prevented.

According to a further embodiment of the method at least one of the nodes of the plurality is specifically adapted for executing a respective software tool corresponding to a specific one of the plurality of activities of the pipeline.

The specifically adapted nodes may be particularly efficient in performing or executing the specific activity, such that resources, in particular energy and time, can be saved when such nodes execute the respective activity.

In preferred embodiments, the specifically adapted node directly executes the respective software tool when the corresponding activity corresponds to the specific activity the node is specifically adapted for.

In particular, the specifically adapted node may be the only node of the plurality that is adapted for executing the specific activity.

According to a further embodiment, the method further comprises verifying, for at least one selected activity of the pipeline, that the respective software tool was executed by reading out, from the secure database system, the corresponding record stored therein.

Reading out the record may include using an encryption key used for encrypting the record for decrypting the record.

The step of verifying may in particular be performed at a time after the software development process was finished, for example a number of days, weeks or months later, and may be performed by a third party, such as a customer of the software product produced or by an auditor.

Verifying the execution of an activity and/or the execution of a respective software tool means that the record created by the respective software tool is verified, that is, it is determined that the record that is read-out from the secure database system was created by the software tool when the activity was executed. Then, the content of the record is a documentary of all actions performed during execution of the activity.

In embodiments, the method includes verifying that the software development process complies to a standard and/or that the pipeline is embodied as a compliance pipeline by verifying execution of all security activities included in the compliance pipeline. Further, verification of the compliance record by reading out the compliance record may be performed.

According to a further embodiment of the method, verifying includes calculating a hash-value of the record to be verified and comparing the calculated hash-value with a respective hash-value generated when the record was created.

A hash-value, such as MD5 or SHA, is a value with a predefined length, for example 64, 128, 256, 512, 1024 or 2048 Bits, which is essentially unique for each digital file. Therefore, it is essentially impossible to change the record such that the original record and the changed record have the same hash-value. Even changing a single bit of the digital file results in a different hash-value.

According to a further embodiment of the method, an encryption key used for encryption of the record is provided to a trust center such that the trust center can verify the record.

This embodiment is particularly useful for software development processes used for developing security relevant software, such as secure software development processes. Here, it is possible for a customer himself to verify that the software development process that was adhered to is a secure process which complies to the customer's security requirements, by verifying all records that relate to security activities, for example, or by verifying all records. Additionally, the trust center may be an external institution that provides certificates for certifying that a company's software development process complies to a specific standard, without the need of a reviewer coming into the company.

It is also possible for the company to give access only to the relevant records, which provide proof that the software development process is a secure process. Therefore, a risk of sensible or confidential information being disclosed to the reviewer or other third parties during the reviewing process can be reduced.

In particular, the records created may be used as proof or evidence when there is disagreement about whether or not a specific security requirement was adhered to during the software development process.

According to a second aspect, an information processing apparatus comprising at least a processor configured for executing a software program, a data storage device for storing data and read-out of stored data, and an input-output configured for inputting or outputting data is suggested. The information processing apparatus is configured for performing the method according to the first aspect.

The processor may be embodied as a central processing unit, a general-purpose processor, or an integrated circuit specifically designed for a task.

The data storage device may include a permanent or nonvolatile storage device such as a hard-disk, and/or it may include a volatile memory, such as RAM.

The input-output device is preferably embodied as a network device for communicating with other network devices, but it may also include a disk drive. The input-output device is particularly configured for receiving or inputting the data that is to be processed in the next activity, and for sending or outputting the data that is created during execution of the activity. Particularly, the network device may be a wireless network device.

As a third aspect, a network comprising a plurality of information processing apparatuses according to the second aspect is suggested, wherein each of the information processing apparatuses is configured for performing the method according to the first aspect.

According to a further aspect, the invention relates to a computer program product comprising a program code for executing the above-described method for creating a verifiable record of executed activities in a software development process when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an example of an embodiment of a method for creating a verifiable record of executed activities in a software development process;
- Fig. 2: shows a schematic block-diagram of an embodiment of the method;
- Fig. 3: shows a schematic block diagram of an embodiment for storing a record;
- Fig. 4: shows a schematic block diagram of an embodiment of a compliance pipeline;
- Fig. 5: shows a schematic block diagram of an embodiment of a compliance record;
- Fig. 6: shows a schematic block diagram of a further embodiment of the method;
- Fig. 7: shows a schematic block diagram of an embodiment of a network of nodes;
- Fig. 8: shows a schematic block diagram of an embodiment for verifying compliance; and
- Fig. 9: shows a schematic block diagram of an embodiment of an information processing apparatus.

In the Figures, like reference numerals designate like or functionally equivalent elements, unless otherwise indicated.

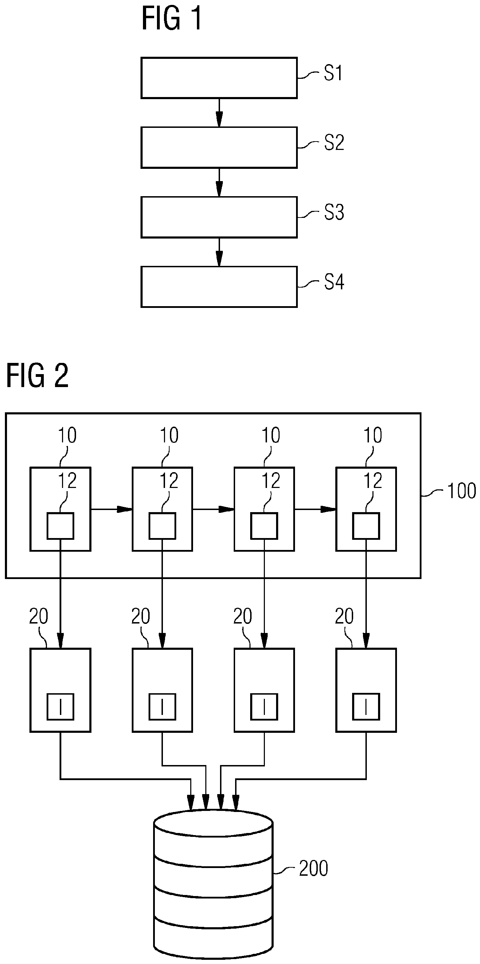

Fig. 1 shows an example of an embodiment of a method for creating a verifiable record 20, 20*, 20s (see Figs. 2, 3, 5, 6 or 8) of executed activities 10, 10s in a software development process. In a first step S1, a pipeline 100, 100c (see Figs. 2 or 4 - 6) including a plurality of activities 10, 10s to be executed based on the software development process is provided. The activities 10, 10s are arranged in a sequential order in the pipeline 100, 100c. In a second step S2 during the software development process, a respective software tool 12, 12s (see Figs. 2 or 4 - 6) is executed for each of the activities 10, 10s of the pipeline 100, 100c. In a third step S3, a record 20, 20*, 20c including activity information I (see Figs. 2, 3, 5, 6 or 8) relating to the respective activity 10, 10s is created by the respective software tool 12, 12s. In a fourth step S4, the record 20, 20*, 20c created by the respective software tool 12, 12s is stored in a secure database system 200, 200* (see Figs. 2, 3, 6 or 8) such that by reading out the record 20, 20*, 20c, proof of the executed activity 10, 10s is provided.

Fig. 2 shows a schematic block-diagram of an embodiment of the method. A pipeline 100 includes a sequential arrangement of a plurality of activities 10. The pipeline 100 corresponds to a software development process and may be called a DevOpspipeline. By running through the pipeline 100, starting with the first activity 10 on the left hand side of the pipeline 100, a software product is developed. For example, an existing software product is changed, enhanced, bug-fixed, or the like, or a new software product is created in the software development process. Therefore, different software development processes may have different pipelines 100, that, is the order and/or the kind of activities 10 included therein may be different. The pipeline 100 may be considered as an orchestration tool which integrates a plurality of different software tools 12 such that these software tools 12 may work together and form a complex process.

Each one of the activities 10 serves a specific purpose in the software development process. For example, a software development process may be construed as including programming of a source code, compiling of the source code, testing of the compiled code, and deploying the compiled code. For each of these steps or stages there may be one activity 10. By providing the pipeline, the activities 10 are arranged in this order in the pipeline, and are joined to each other, such that the pipeline 100 can be run through. It can be said that the software development process is mapped to the pipeline 100 including the activities 10.

Each of the activities 10 is executed by a respective software tool 12. The software tool 12 may be any kind of commercial, freely available or individually programmed software program. The software tool 12 may also be called a plugin for the pipeline 100. Here, execution of the activity 10 does not necessarily mean that the activity 10 is performed automatically be the software tool 12. For example, the activity 10 of programming a source code will often include human interaction, that is, the programming is performed by a software engineer, for example. However, the software engineer will use a software for creating the source code, such as a text editor for example. The respective software tool 12 corresponding to the activity 10 of programming the source code will therefore include a text editor, which is started automatically. Beside this, the software tool 12 will include functionality to create a record 20 including activity information I. In particular, the record 20 is created when the activity 10 is finished, for example when the source code is complete.

Then, two processes take place. By finishing one activity 10, the subsequent activity 10 in the pipeline 100 is automatically triggered by the pipeline 100, except when the finished activity 10 was the last activity 10 in the pipeline 100. Additionally, the record 20 created by the respective software tool 12 including the activity information I corresponding to the finished activity 10 is provided as output by the software tool 12 or the pipeline 100, and is stored in a secure database system 200.

The record 20 may also be called an artifact which is created by the software tool 12. The record is in particular a digital file that may be stored using a data storage device. The record 20 includes activity information I, and may include further information. Activity information I includes specifically all kinds of information that may be gathered during execution of the activity 10. Particularly, the activity information I includes a kind of the activity 10, a purpose of the activity 10, a way of implementing the activity 10, any data inputted during execution of the activity 10, how the activity 10 was executed, performance statistics of the activity 10, and so on. Further information that may be included in the record 20 may include information about a hardware on which the respective software tool 12 executed the activity 10 and an environment of the hardware, such as an operating system, installed devices, installed software, a network configuration, environmental parameters such as a temperature, humidity, voltage level of a power supply, and the like. It may also include information about any input provided to the activity 10, about the pipeline 100, and others more. It is noted that all this information may be considered as being included in the activity information I or included in another portion of the record 20.

The record 20 may be created as a container which may include a plurality of different files.

Each record 20 that is created when execution of one of the activities has finished is stored in the secure database system 200. The secure database system 200 is implemented, for example, as a database stored on a personal computer. Security is provided by an access-control system, for example. Preferably, the secure database system 200 is implemented as a back-up system, such as a version control system, that keeps a plurality of versions of each file. In this case, it is possible that a record 20 is created by the respective software tool 12 not only when execution of the activity 10 is finished, but also during execution of the activity 10, for example at specified time intervals or when specified actions are performed during execution of the activity 10.

By reading out a respective record 20 from the secure database system 200 at a later time it is possible to check how the corresponding activity 10 was performed and which software tool 12 was used. To provide for a higher security, it is preferred that a hash-value of at least the activity information I is calculated when the record 20 is created. By calculating the hash-value of the activity information I after reading out the record 20, it can be checked if the activity information I corresponds to the originally created activity information I or if it was manipulated.

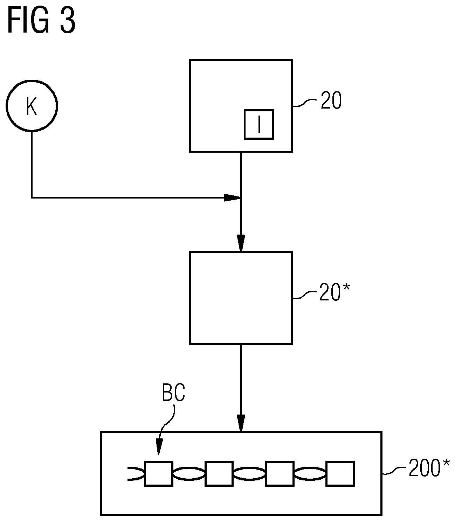

Fig. 3 shows a schematic block diagram of an embodiment for storing a record 20. For example, this embodiment may be employed in the method as described with reference to Fig. 1 or 2.

In the embodiment of Fig. 3, an encryption key K is used for encrypting the record 20 including the activity information I. This encryption may be performed by the respective software tool 12 which created the record 20, by the pipeline 100, and/or by a plugin which is included in the pipeline 100. The result of encrypting the record 20 is an encrypted record 20*. The encrypted record 20* includes all information present in the original record 20, but the information cannot be understood unless the encryption key K and encryption method is known, such that the encrypted record 20* can be decrypted. Note, that for each one of the records 20 created when a pipeline 100 is run through, an individual encryption key K may be used.

Additionally, the encrypted record 20* is stored in a block chain BC stored in a distributed database system 200*. By this, integrity of the stored records 20* is ensured, since each new block is created as a function of a hash-value of the foregoing block. If only a small piece of information is changed in one of the earlier blocks, the hash-values of all subsequent block changes, such that manipulations can be detected. Further, it is essentially impossible to perform changes to a record 20* once it is stored in the block chain BC. Thus, the embodiment shown in Fig. 3 greatly increases security and integrity of the method.

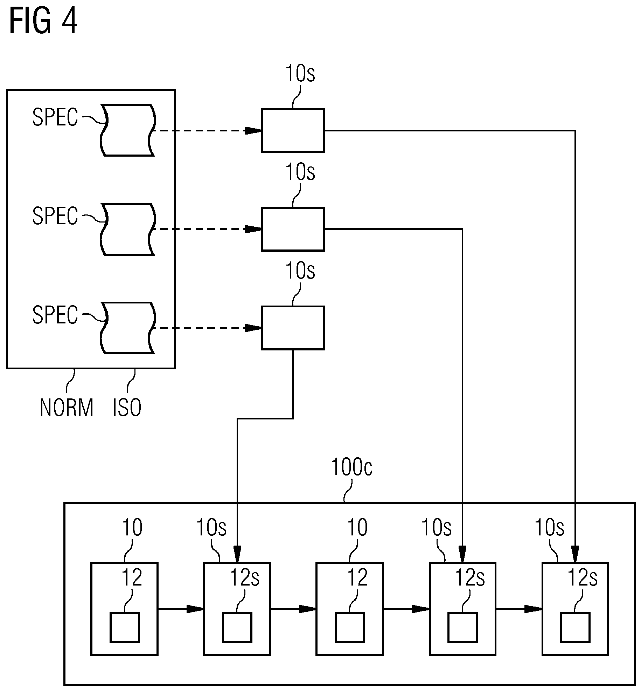

Fig. 4 shows a schematic block diagram of an embodiment of a compliance pipeline 100c, which is preferably used for implementing a secure software development process. The compliance pipeline 100c includes security activities 10s, which are arranged in between other activities 10 in the compliance pipeline 100c. Each one of the security activities 10s implements a security specification SPEC included in a predefined set NORM of security specifications SPEC.

In special embodiments, the predefined set NORM of security activities SPEC corresponds to a standard ISO defined by an independent board of security specialists, for example IEC 62443-4-1, ISO 27034, or BSIMM.

Each security activity 10s is executed by a respective security tool 12s. The respective security tool 12s is specifically designed such that it can be ensured that the security activity 10s implementing the security specification SPEC meets the requirements of the security specification SPEC and how these requirements are met. IN particular, all this information is stored in the record 20 which is created by the respective security tool 12s.

An advantage of the compliance pipeline 100c is that a software product, that was produced using the compliance pipeline 100c, will comply to the predefined set NORM of security specifications SPEC or to the standard ISO. Further, by reading out the corresponding records 20, 20* (see Figs. see Figs. 2, 3, 5, 6 or 8) from the secure database system 200, 200* (see Figs. 2, 3, 6 or 8) it can be verified, that is, proven, that and how the software product complies.

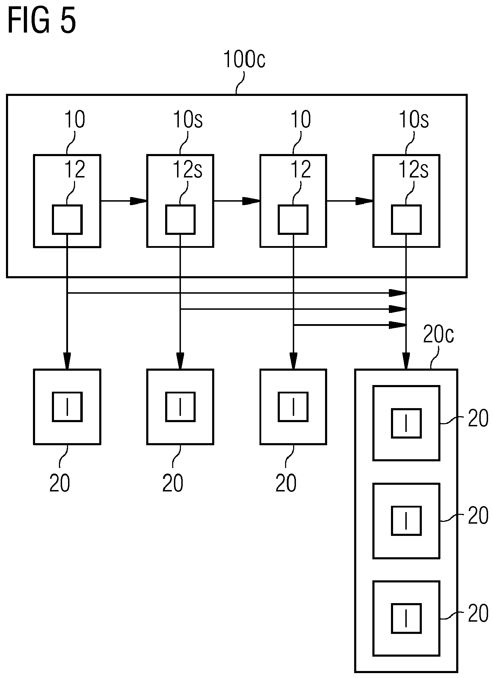

Fig. 5 shows a schematic block diagram of an embodiment of a compliance record 20c, which may be additionally created and stored when a pipeline was run through. For example, the compliance record 20c is created in a final security activity 10s included in a compliance pipeline 100c.

The compliance record 20c includes all records 20 created when the compliance pipeline 100c was run through. Further, it includes additional information, in particular a source code of the software product that was produced and the compiled source code. Thus, the compliance record 20c is a complete set of information that allows to provide evidence that the software product complies to specific security specifications SPEC and how compliance is achieved.

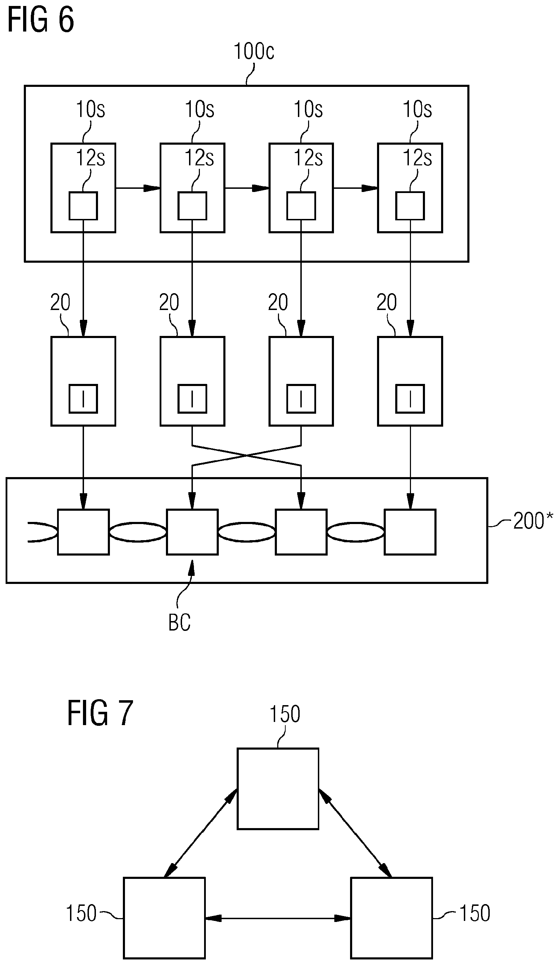

Fig. 6 shows a schematic block diagram of a further embodiment of the method. The embodiment shown in Fig. 6 has all features described with reference to Fig. 2, with the following differences. The pipeline 100 is embodied as a compliance pipeline 100c including only security activities 10s which are executed by respective security tools 12s. The respective records 20 including the activity information I created by the security tools 12s are then stored in individual blocks in a block chain BC, which is stored in a distributed database system 200*. As shown in Fig. 6, the records 20 do not have to be stored in the block chain BC in the same order of the security activities 10s of the compliance pipeline 100c.

Fig. 7 shows a schematic block diagram of an embodiment of a network of nodes 150. Each one of the nodes 150 is configured for performing the method as described according to one of the embodiments above. The nodes 150 are connected by a data communication network, such as a local area network or a wide area network.

Some of the nodes may further be configured for storing the block chain BC (see Figs. 3 or 6) or a part of the block chain BC. Thus, the network of the nodes 150 may be implemented as a distributed database system 200* (see Fig. 3 or 6) .

The nodes 150 are in particular adapted to observe the block chain BC stored in the distributed database system 200* for new blocks entering the block chain BC. For example, each block corresponds to a record 20, 20* created during a run of the pipeline 100, 100c. In particular, the record 20, 20* includes information about the pipeline 100, 100c which it originated from and may include output data. For example, the record 20, 20* includes the information which is the next activity 10, 10s that is to be performed in the pipeline 100, 100c or may include a complete definition of the pipeline 100, 100c. The output data may be data that is required for the subsequent activity 10, 10s to be executed in the respective pipeline 100, 100c.

When a new block enters the block chain BC, the nodes 150 detect the block and can derive from the information included in the record 20, 20* which is the next activity 10, 10s to be performed. Then, at least one of the nodes 150 executes the activity 10, 10s by executing the respective software tool 12, 12s. The node 150 may first publish a work-claim, which gets accepted by the other nodes 150 or by the block chain BC. Then, the node 150 starts executing the activity 10, 10s and creates a record 20, 20* when the activity 10, 10s is finished, which enters as new block in the block chain BC.

Some of the nodes 150 in the network may be specifically adapted for executing a specific one of the activities 10, 10s, and may be the only nodes 150 in the network adapted for executing the activity 10, 10s. Such nodes 150 may start executing the respective activity 10, 10s directly, without publishing a work-claim, when the subsequent activity 10, 10s of the pipeline 100, 100c is the respective activity 10, 10s.

The network of nodes 150 has the advantage that a work-load when running through a pipeline 100, 100c can be distributed evenly over several nodes 150 in the network, wherein the levelling is performed automatically by the nodes 150 by observing the block chain BC for new blocks.

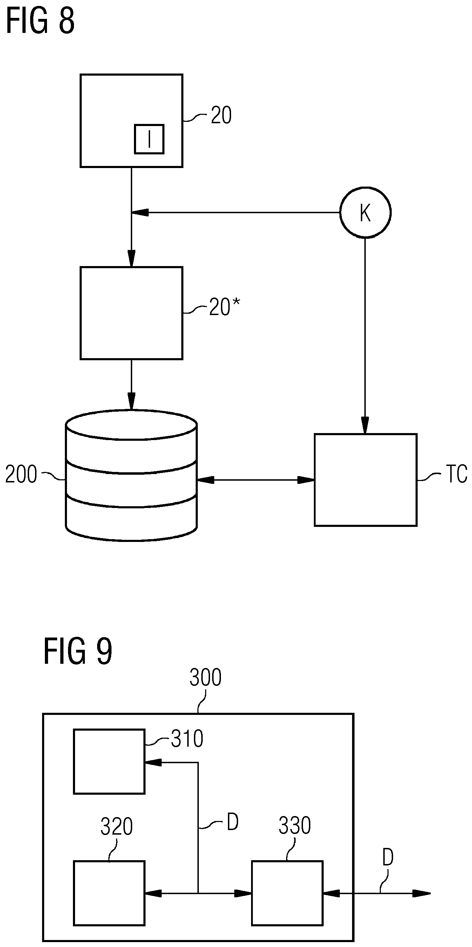

Fig. 8 shows a schematic block diagram of an embodiment for verifying compliance of a software product to certain security specifications SPEC (see Fig. 4) obtained from a secure software development process by a trust center TC. The trust center TC is an external entity, for example an auditor or a customer of the secure software product.

As shown in Fig. 8, a record 20 including activity information I created by a security tool 12s when executing a security activity 10s is encrypted using an encryption key K, and the encrypted record 20* is stored in the secure database system 200. In order to enable the trust center TC to verify the software product, the trust center TC has access to the secure database system 200. Since encrypted records 20* are stored therein, the trust center TC cannot understand the content of the encrypted records 20*, such that these are safe against unauthorized read-out. By providing the encryption key K for a specific encrypted record 20*, the trust center TC can read-out and verify the record 20 including the activity information I which is of interest in order to verify the software product.

This has the advantage that all other information or records stored in the secure database system are not disclosed to the trust center TC, such that the software company producing the software products can rest assured that no sensible or confidential information, including company secrets, may be obtained by the trust center TC. Therefore, the trust center TC is only provided with the encryption keys K that are necessary to read-out the encrypted records 20* to provide evidence that the software product complies to the security specifications SEPC, the predefined set NORM of security specifications SPEC or the standard ISO.

Fig. 9 shows a schematic block diagram of an embodiment of an information processing apparatus 300. The information processing apparatus 300 includes a processor 310 that is configured for executing a software program, in particular a software tool 12 or a security tool 12s corresponding to an activity 10 or a security activity 10s. It further includes a data storage device 320 for storing data D and read-out of stored data D, and an input-output device 330 for inputting and outputting data D. The data D includes, in particular, records 20 including activity information I created when the information processing apparatus 300 executed an activity 10, 10s of a pipeline 100, 100c in a software development process. The information processing device 300 is particularly configured for performing the method according to one of the embodiments as described above. For example, the information processing device 300 may be embodied as a node 150 as described with reference to Fig. 7.

Further, a plurality of information processing apparatuses 300 may be connected by a data communication network to form a network of nodes 150, as described with reference to Fig. 7. The information processing devices 300 are then configured to exchange data D via their respective input-output devices 330.

The information processing devices 300 may also be configured for storing the block chain BC (see Fig. 3 or 6) or a part thereof.

Although the present invention has been described in accordance with preferred embodiments, it is obvious for the person skilled in the art that modifications are possible in all embodiments.

## Claims

1. A method for creating a verifiable record (20) of executed activities (10) in a software development process, the method comprising:
providing (S1) a pipeline (100) including a plurality of activities (10) to be executed based on the software development process, wherein the activities (10) are arranged in a sequential order in the pipeline (100),
executing (S2), during the software development process, for each of the activities (10) of the pipeline (100), a respective software tool (12),
creating (S3), by the respective software tool (12), the record (20) including activity information (I) relating to the activity (10), and
storing (S4) the record (20) created by the respective software tool (12) in a secure database system (200) such that by reading out the record (20), proof of the executed activity (10) is provided.

2. The method according to claim 1, wherein the record (20) is encrypted by using an encryption key (K) and the encrypted record (20*) is stored in the secure database system (200).

3. The method according to claim 1 or 2, wherein the secure database system (200) is implemented as a block chain (BC) stored in a distributed database system (200*).

4. The method according to one of claims 1 to 3, wherein at least one of the activities (10) in the pipeline (100) is a security activity (10s) which implements at least one security specification (SPEC) relating to a secure software development process, and the respective software tool (12) is a security tool (12s).

5. The method according to claim 4, wherein the pipeline (100) is embodied as a compliance pipeline (100c) including a predefined set (NORM) of security activities (10s).

6. The method according to claim 5, wherein the predefined set (NORM) of security activities (10s) included in the compliance pipeline (100c) is selected such that each of a plurality of security specifications (SPEC) defined in a standard (ISO) is implemented by at least one of the security activities (10s) included in the predefined set (NORM).

7. The method according to claim 6, wherein the record (20) includes a source code, a reference to a security specification (SPEC) which the source code fulfills, information about how the security specification (SPEC) is met, and/or the respective software tool (12) that created the record (20).

8. The method according to one of claims 5 to 7, wherein a compliance record (20c) is created and stored, the compliance record (20c) including at least a source code of a software product produced, a compilation of the source code of the software product, and all records (20) created during the software development process.

9. The method according to one of claims 3 to 8, wherein the record (20) created and stored in the block chain (BC) further includes information identifying the pipeline (100) and input data.

10. The method according to claim 9, further comprising:
observing, by a plurality of nodes (150) arranged in a distributed network, wherein each of the nodes (150) of the plurality is configured for executing at least one respective software tool (12), the block chain (BC) of the distributed database system (200*) to detect new records (20) being stored therein, and
executing the respective software tool (12) corresponding to the subsequent activity (10) in the pipeline (100) by at least one of the nodes (150) of the plurality.

11. The method according to claim 10, wherein one of the nodes (150) of the plurality, before executing a respective software tool (12), publishes a work-claim for claiming the execution of the respective software tool (12) and executes the respective software tool (12) if the work-claim is accepted by the block-chain (BC) and/or the other nodes (150).

12. The method according to claim 10 or 11, wherein at least one of the nodes (150) of the plurality is specifically adapted for executing a respective software tool (12) corresponding to a specific one of the plurality of activities (10) of the pipeline (100).

13. The method according to one of claims 1 - 12, further comprising:
verifying, for at least one selected activity (10) of the pipeline (100), that the respective software tool (12) was executed by reading out, from the secure database system (200), the corresponding record (20) stored therein.

14. The method according to claim 13, wherein verifying includes calculating a hash-value of the record (20) to be verified and comparing the calculated hash-value with a respective hash-value generated when the record (20) was created.

15. The method according to claim 13 or 14, wherein an encryption key (K) used for encryption of the record (20) is provided to a trust center (TC) such that the trust center (TC) can verify the record.

16. An information processing apparatus (300) comprising at least a processor (310) configured for executing a software program, a data storage device (320) for storing data (D) and read-out of stored data (D), and an input-output device (330) for inputting and outputting data (D), the information processing apparatus (300) being configured for performing the method according to one of claims 1 to 15.

17. A network comprising a plurality of information processing apparatuses (300) according to claim 16, wherein each of the information processing apparatuses (300) is configured for performing the method according to one of claims 1 - 15.
